# EUROPEAN PATENT SPECIFICATION

(11) **EP 1 747 948 B1**
(45) Date of publication and mention of the grant of the patent: **29.04.2009**
(21) Application number: 06013374.1
(22) Date of filing: 28.06.2006
(51) Int. Cl.: B60R 21/20

(54) **Airbag device comprising folded airbag wrapped by a sheet**
Gassackanordnung mit gefaltetem Gassack mit Hülle
Dispositif de coussin gonflable contenant coussin gonflable plié avec enveloppe

(30) Priority: 25.07.2005 JP 2005214522
(43) Date of publication of application: 31.01.2007
(73) Proprietor: TAKATA CORPORATION, Minato-ku, Tokyo 106-8510 (JP)
(72) Inventor: Hasebe, Masahiro, c/o Takata Corporation, Minato-ku Tokyo 106-8510 (JP); Narimoto, Yukitoshi, c/o Takata Corporation, Minato-ku Tokyo 106-8510 (JP)
(74) Representative: Vossius & Partner

(56) References cited:
- EP-A- 1 452 403
- EP-A1- 1 338 482
- EP-A2- 1 580 083
- US-A- 5 022 675

## Description

The present invention relates to an airbag device including an airbag that is inflated at the time of a vehicle collision to receive a passenger, and more specifically, it relates to an airbag device including an airbag having a left airbag section and a right airbag section that are inflated on the right and left, respectively, in front of a passenger.

US-A-5 022 675 relates to a method of folding an air bag and an air bag having a main panel defining a top, front, and bottom portions and side panels. The top and bottom portions define a neck which is narrower than the front portion. An end of the folded bag opposite the neck is rolled or folded toward the neck and the rolled up portion of the bag is moved forwardly proximate the neck portion so that the bag material between the rolled up portion and neck portion extends away therefrom as a flap. The flap is enveloped about a portion of the circumference of the rolled up portion.

EP- A-1 580 083 which was published after the priority date of the present application relates to an airbag apparatus and a method of folding an airbag. A left airbag section and a right airbag section are folded firstly to obtain a first folded body elongated in the fore-and-aft direction. Subsequently, the distal sides from a joint belt, which connects the midsections in the expanding direction of the left airbag section, and the right airbag section, are opened laterally apart from each other, and the rear sides from the joint belt are folded so as to be reduced in width in the fore-and aft direction to obtain the second folded body, and then the lateral width is reduced by the third folding operation to obtain the final folded body.

JP-A-2004-268903 discloses an airbag for receiving a passenger at the time of a vehicle collision and a folding method thereof in which the airbag has a left airbag section and a right airbag section that are inflated on the right and left, respectively, in front of a passenger and is adapted to be inflated by an inflator common to the airbag sections. In the airbag disclosed in the publication, the left airbag section and the right airbag section are not connected to each other, and middle portions of the airbag sections in the fore-and-aft direction thereof are connected by a connecting part.

In the above publication, portions of the airbag sections closer to their leading ends than the connecting part are folded along vertical folding lines, respectively, so as to be primary folded bodies, and then, the primary folded bodies are folded to be smaller.

This airbag is folded and accommodated within a case and covered with a cover. When the inflator (gas generator) begins to discharge gas at the time of a vehicle collision, the airbag is inflated toward the front of a passenger while pushing the cover open.

Accordingly, the object of the present invention is to provide an airbag device made by folding an airbag having a left airbag section and a right airbag section and wrapping the folded airbag by a shape-retaining sheet.

An airbag device according to Claim 1 includes a folded airbag, a case accommodating the airbag, and an inflator for inflating the airbag. The airbag on a leading-end side is inflated in a direction away from a base-end side of the airbag by gas discharged from the inflator disposed on the base-end side. The airbag includes a base end part having a gas introducing port that receives gas from the inflator, a left airbag section that is connected to the base end part and inflated on the left in front of a passenger, and a right airbag section that is connected to the base end part and inflated on the right in front of the passenger. The folded airbag is wrapped by a shape-retaining sheet.

The airbag device according to Claim 2 is an airbag device according to Claim 1 in which the shape-retaining sheet is provided with an opening for allowing the folded airbag to be observed.

The airbag device according to Claim 3 is an airbag device according to Claim 2 in which the airbag is made by primarily folding the left airbag section and the right airbag section to form primary folded bodies that are elongated in forward and rearward directions, then secondarily folding the primary folded bodies so as to have a reduced longitudinal width to form the secondary folded body, and thereafter folding the base end part. The opening is provided in a position where it overlaps at least one of the lateral face of the secondary folded body on the passenger side and the lateral face of the secondary folded body on the opposite side to the passenger.

The airbag device according to Claim 4 is an airbag device according to Claim 3 in which a portion of the base end part closer to the passenger is pulled out farther than the secondary folded body and folded, in which a portion of the lateral face of the secondary folded body in the lateral face of the folded airbag is covered by the pulled-out portion of the base end part, and the opening is provided in a position where it faces both the pulled-out portion of the base end part and the lateral face of the secondary folded body that are not covered by the base end part.

In the airbag device according to the invention, when the inflator operates to inflate the airbag, the gas from the inflator is introduced into the base end part of the airbag through the gas introducing port to inflate the base end part first. Next, the gas is introduced into the left airbag section and the right airbag section to inflate them. The inflated left airbag section receives the left chest of a passenger and the inflated right airbag section receives the right chest of the passenger. Hard and strong ribs exist in the left and right chests. The airbag receives and absorbs an impact on the passenger through the ribs.

Further, in the invention, in a state in which the airbag is inflated, if the spacing between the front most ends of the left airbag section and the right airbag section is 150 to 450 mm, the inflated left airbag section directly faces a central region of the left chest, and the inflated right airbag section directly faces a central region of the right chest. As a result, the region of the ribs of the upper half of the passenger's body is reliably and securely received by the airbag.

In the present invention, since the folded airbag is wrapped by a shape-retaining sheet, the folded shape of the airbag is maintained. Therefore, when the folded body of the airbag is accommodated within the case, the work can be efficiently performed.

Also, any slip between the folded body of the airbag accommodated within the case and the inner face of the case, the instrument panel or a lid is eliminated or suppressed.

According to Claim 2, the folded state of the folded body of the airbag can be observed with eyes or fingers through the opening provided in the shape-retaining sheet.

According to Claim 3, the airbag is made by primarily folding the left airbag section and the right airbag section to form primary folded bodies that are elongated in forward and rearward directions, by secondarily folding the primary folded bodies so as to have a reduced longitudinal width to form a secondary folded body, and then by folding the base end part.

The opening is provided in a position where it faces the lateral face of the folded body of the airbag. As a result, the folded state of the airbag formed on the lateral face can be observed.

As defined in Claim 4, if the opening is provided in a position where it faces both the secondary folded body and the base end part overlapped with the lateral face of the secondary folded body, the folded state of both the secondary folded body and the base end part can be observed.

### [Best Mode for Carrying Out the Invention]

Hereinafter, an embodiment of the invention will be described with reference to the accompanying drawings.
Fig. 1 is a perspective view of an airbag according to an embodiment of the invention;
Fig. 2 is a horizontal sectional view of the airbag of Fig. 1;

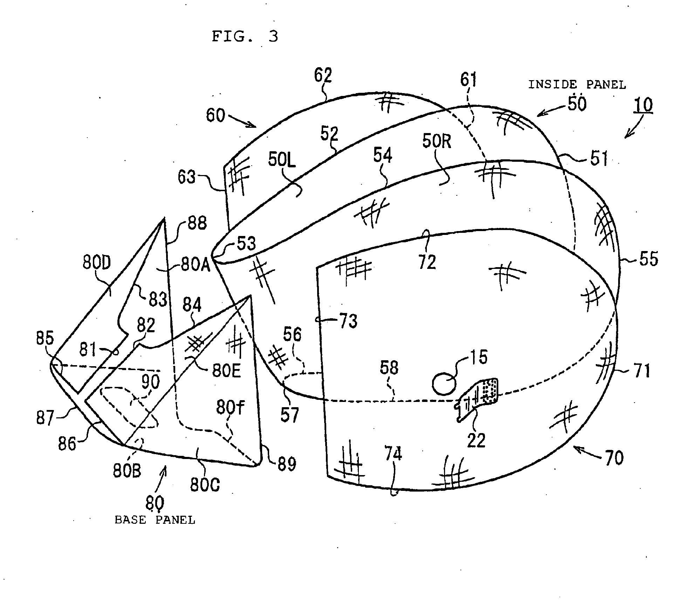

Fig. 3 is an exploded perspective view showing the structure of panels of the airbag of Fig. 1;
Figs. 4 and 5 are exploded perspective views in the course of sewing of the airbag of Fig. 1;
Figs. 6 to 19 are explanatory views showing the process of folding the airbag of Fig. 1;
Fig. 20 is a perspective view of a shape-retained folded body with a shape retaining sheet of the airbag of Fig. 1 viewed from a passenger side;
Fig. 21 is a longitudinal sectional view of an airbag device including the folded airbag of Fig. 1;
Fig. 22 is a longitudinal sectional view of the airbag device of Fig. 1 when the airbag is being inflated; and
Fig. 23 is a perspective view of an airbag according to another embodiment.

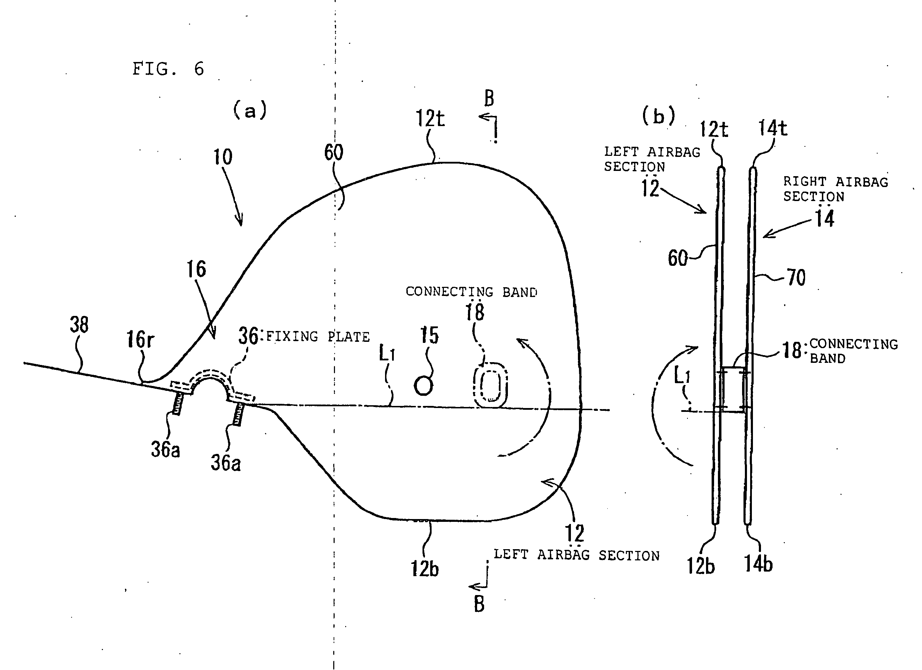

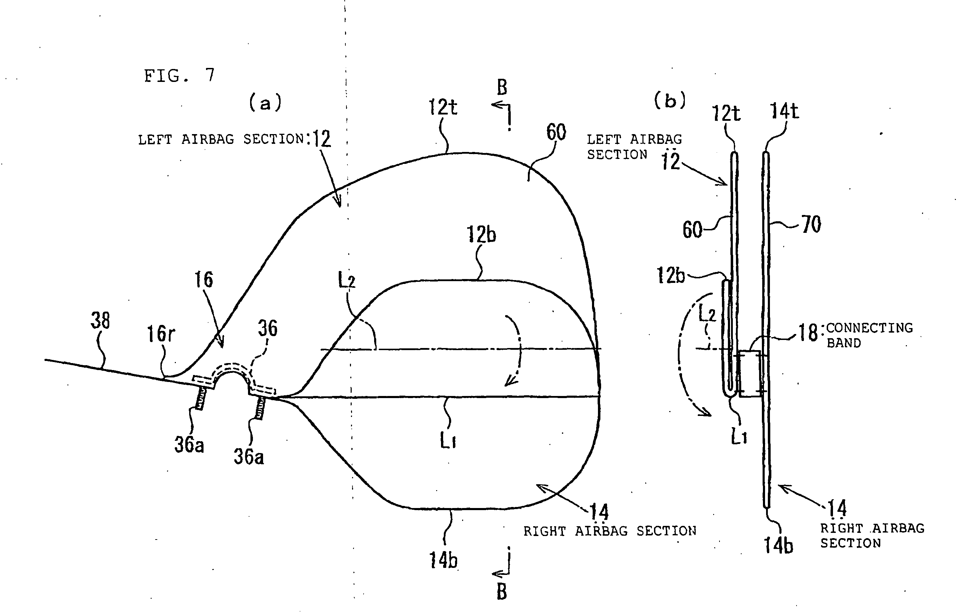

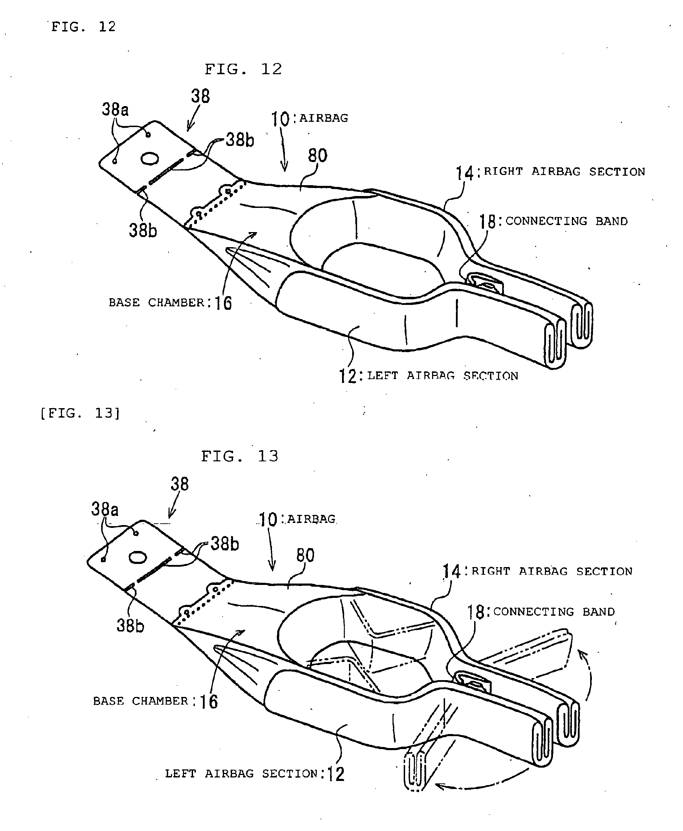

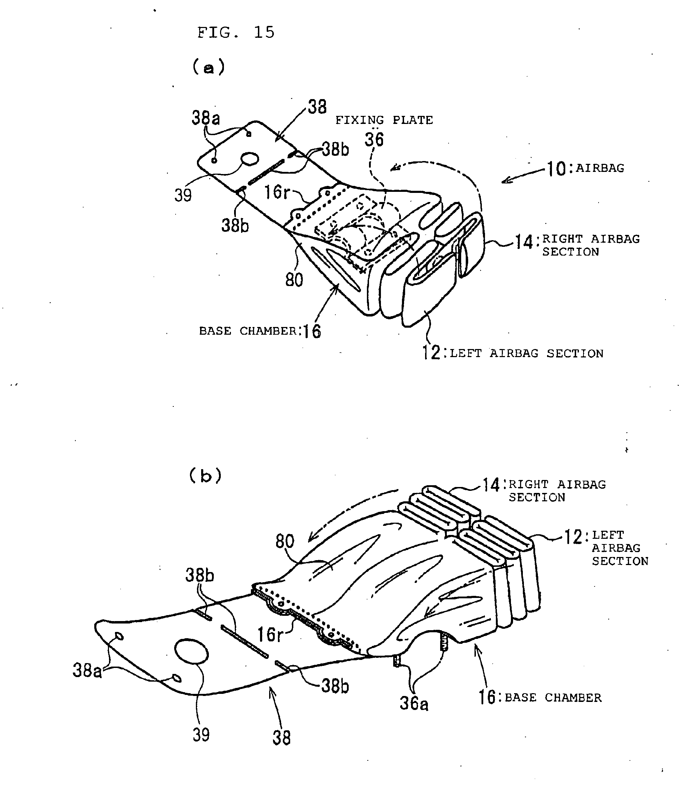

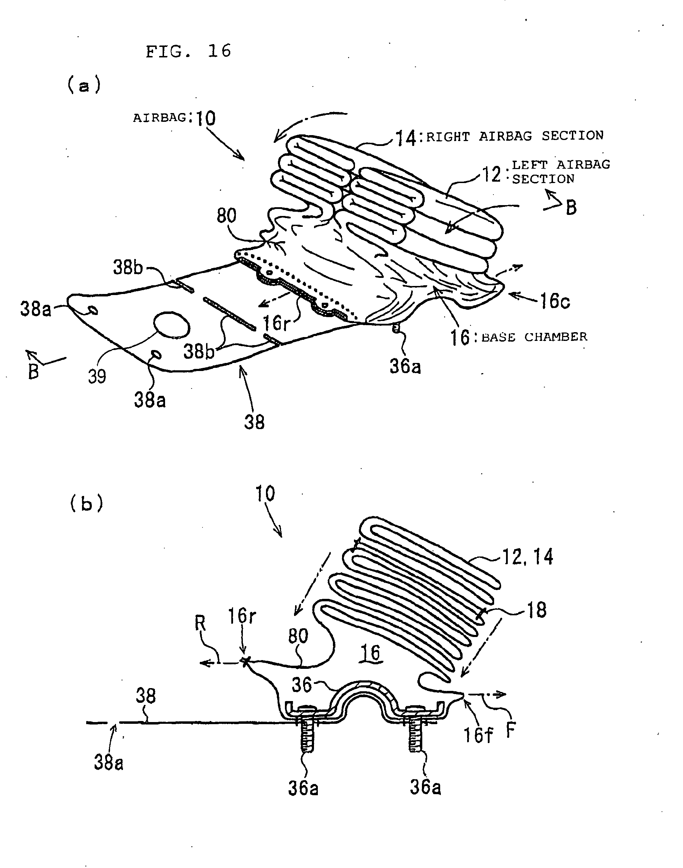

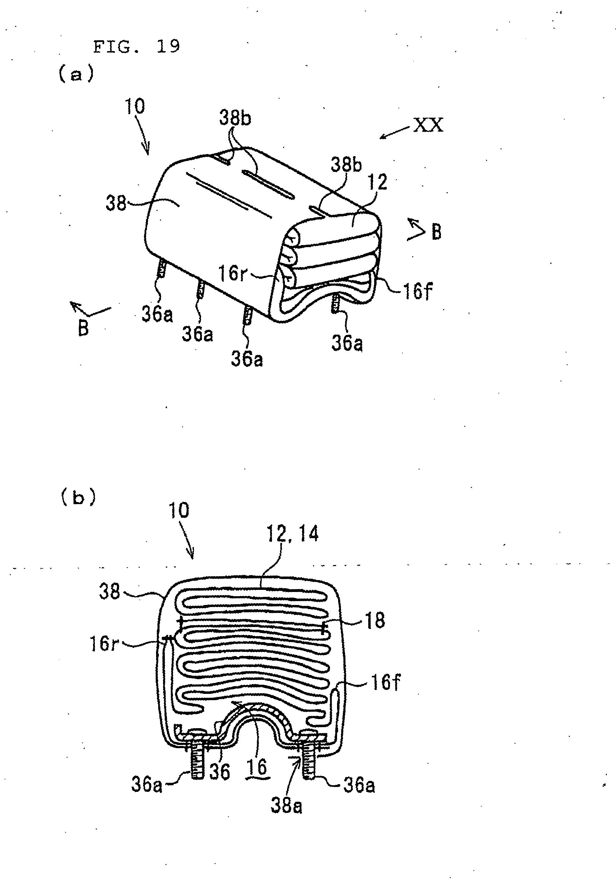

Fig. 6 shows a state of the airbag before being folded, Figs. 7 to 18 show states of the airbag while being folded, and Fig. 19 shows a state of the airbag when being completely folded. In Figs. 6 to 11, Figs. 6(a), 7(a), 8(a), 9(a), 10(a) and 11(a) are side views of the airbag, and Figs. 6(b), 7(b), 8(b), 9(b), 10(b) and 11(b) are sectional views taken along the lines B-B in Figs. 6(a), 7(a), 8(a), 9(a), 10(a) and 11(a). Figs. 12 to 14 and 15(a) are perspective views as seen from the leading side of the airbag (passenger side), and Fig. 15(b) and Figs. 16(a), 17(a), 18(a) and 19(a) are perspective views as seen from the base end (rear end) of the airbag. Figs. 16(b), 17(b), 18(b) and 19(b) are sectional views taken along the lines B-B of Figs. 16(a), 17(a), 18(a) and 19(a).

In this embodiment, an airbag device 1 is a front passenger airbag device of an automobile. The airbag device 1 includes an airbag 10, a shape-retaining sheet 38 that retains the shape of a folded body of the airbag 10, a case (container) 40 that accommodates the folded airbag 10, and an inflator 34 that inflates the airbag 10.

An airbag 10 includes a left airbag section 12 that is inflated on the front left side of a passenger, a right airbag section 14 that is inflated on the front right side of the passenger, and a base chamber 16 that communicates one end of the left airbag section 12 with one end of the right airbag section 14. The base chamber 16 is the base side of the airbag 10. Accordingly, the left airbag section 12 and the right airbag section 14 are respectively inflated in a direction away from the base chamber 16.

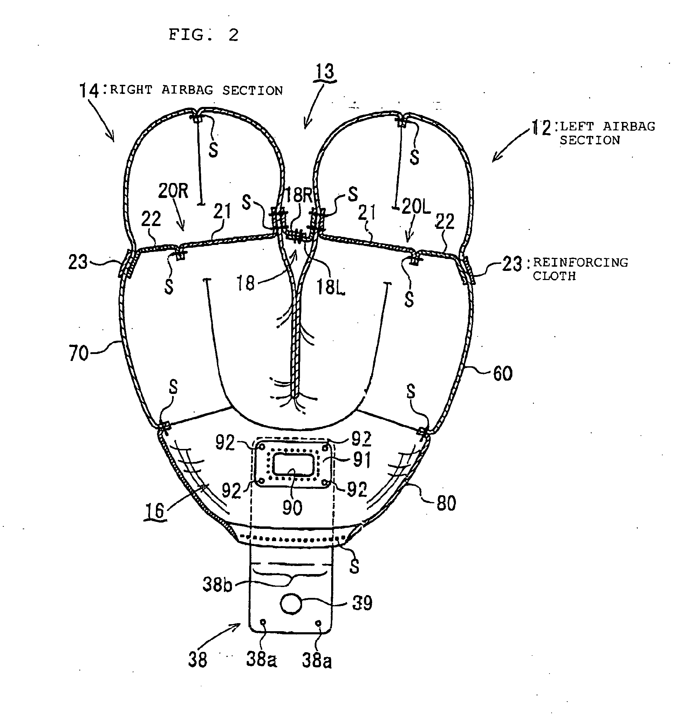

When the airbag 10 is inflated, a space 13 (Fig. 2) is formed between a front most end of the left bag 12 and a front most end of the right bag 14 without a bridging member such as a tie panel therebetween. The space 13 is opened toward the passenger (toward the upper side in Fig. 2).

When the airbag 10 is completely inflated, it is preferable that the spacing between a front most end of the left airbag section 12 and a front most end of the right airbag section 14 be 150 to 450 mm, particularly, 170 to 430 mm.

It is also preferable that the horizontal distance from one of the front most ends to a deepest portion of the space 13 be 280 to 480 mm, particularly, 310 to 450 mm. In a middle portion between the front most end to the deepest portion, the airbag sections 12 and 14 are connected to each other by a connecting band 18. In this embodiment, the connecting band 18 comprises a left half of connecting band 18L and a right half of connecting band 18R.

The outer faces of the left and right airbag sections 12 and 14 are provided with vent holes 15. Width-regulating tethers 20L and 20R (forming a tether belt or strap) that extend in the right-and-left direction are stretched within the airbag sections 12 and 14, respectively. The structure of the tethers 20L and 20R will be described later.

In this embodiment, the shape-retaining sheet 38 for wrapping a folded body of the airbag 10 is connected to a rear end of the base chamber 16. The shape-retaining sheet 38 in this embodiment is a band-like sheet that extends rearwardly from the rear end of the base chamber 16. A portion of the shape-retaining chamber closer to the base end is sewn on the bottom face of the base chamber 16.

The shape-retaining sheet 38 wraps the folded body so as to go round from behind (the side opposite to a passenger) the folded body of the airbag 10 through above the top face of the folded body and the rear side (the passenger side) of the folded body into below the bottom face of the folded body.

Insertion holes 38a for the stud bolts 36a are bored in a portion of the shape-retaining sheet 38 in the vicinity of the leading end.

The shape-retaining sheet 38 is adapted to be ruptured when it receives a predetermined tension or more in its extending direction. Specifically, perforated slits 38b are formed in a middle portion of the shape-retaining sheet 38 in the extending direction of the sheet 38 so as to run in a direction intersecting the extending direction. When the shape-retaining sheet 38 receives a predetermined tension or more in the extending direction, it is torn and ruptured along the slits 38b.

The shape-retaining sheet 38 is provided with an opening 39 for allowing the state of the folded body wrapped by the shape-retaining sheet 38 to be observed. In this embodiment, the opening 39 is disposed in a region of the shape-retaining sheet 38 that overlaps the side of the folded body on the passenger side. In addition, the slits 38b extends so as to traverse a longitudinal intermediate portion of a region of the shape retaining sheet 38 that overlaps the top face of the folded body. The opening 39 is located in a middle portion between the slits 38b and the insertion holes 38a (in the vicinity of the leading end of the shape-retaining sheet 38).

The panel structure, etc. of the airbag 10 will be described below. In the following description, the front side (leading side) of each panel means the leading side of the airbag 10 in the inflation direction and the rear side means the base side of the airbag in the inflation direction.

The airbag 10 comprises a total of four panels, i.e., an inside panel 50, a left outside panel 60, a right outside panel 70, and a base panel 80. Each of the left and right halves of connecting band 18L and 18R is connected to the side panel 50.

The inside panel 50 is substantially gourd-shape elongated panel. A left side 50L and a right side 50R are formed by folding the inside panel 50 into two in the middle thereof. In the inside panel 50, the left side 50L constitutes the inner face of the left airbag section 12, and the right side 50R constitutes the inner face of the right airbag section 14. The entire peripheral edge of the inside panel 50 comprises a lower edge 56, a leading edge 51 and an upper edge 52 of the left side 50L, an upper edge 53 which lies in the vicinity of a folded-back portion constituting the deepest portion between valleys of the airbag, an upper edge 54, a leading edge 55 and a lower edge 58 of the right side 50R, and a lower edge 57 which lies in the vicinity of the folded-back portion.

The entire peripheral edge of the left outside panel 60 comprises a leading edge 61, an upper edge 62, a straight rear edge 63, and a lower edge 64 (here, reference numeral 64 is not shown). The entire peripheral edge of the right outside panel 70 comprises a leading edge 71, an upper edge 72, a straight rear edge 73, and a lower edge 74.

The base panel 80 has a left lateral face 80A, a bottom face 80B, a right lateral face 80C, a left flap 80D constituting a top left side, a right flap 80E constituting a top right side. The base panel 80 is folded in such a manner that the lateral faces 80A and 80C form a substantially triangular shapes. The face of the base panel 80 that faces the leading side of the airbag is opened.

The entire peripheral edge of the base panel 80 comprises facing edges 81 and 82 between substantially rectangular flaps 80D and 80E, front edges 83 and 84 (flap front edges) of the flaps 80D and 80E, rear edges 85 and 86 of the flaps 80D and 80E, a rear edge 87 facing the rear edges 85 and 86, front edges 88 and 89 (lateral front edges) of the lateral faces 80A and 80C, and a bottom front edge 80f that connects the lateral front edges 88 and 89 with each other.

As shown in Fig. 2, the bottom face 80B of the base panel 80 is provided with a gas introducing port 90. A frame-like reinforcing cloth 91 is overlapped with and sewn to the gas introducing port 90 so as to surround it. The gas introducing port 90 is rectangular, and has bolt insertion holes 92 formed in the vicinity of its four corners. Also, a peripheral edge of the gas introducing port 90 is provided with a locking hole (not shown) to which a pawl of a fixing plate 36, as will be described below, is to be locked.

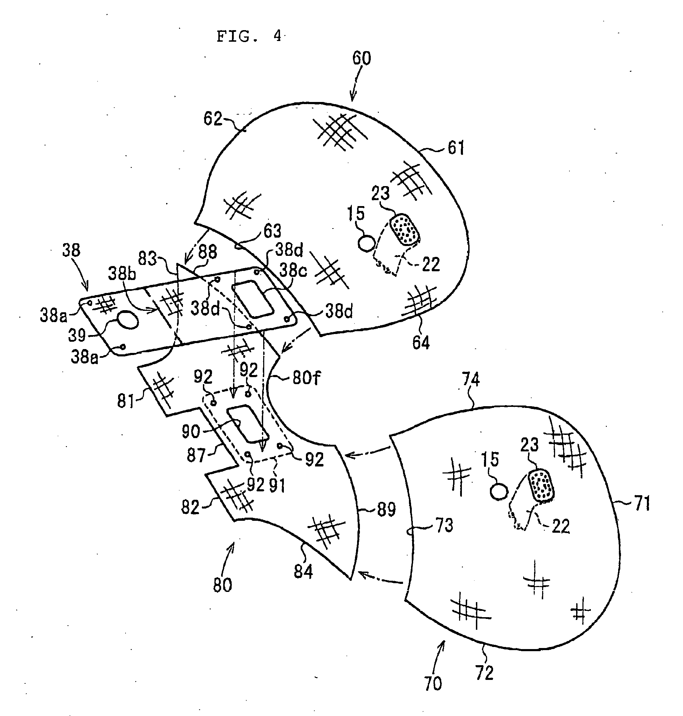

In addition, as shown in Fig. 4, in this embodiment, a gas introducing port 38c, stud bolt insertion holes 38d, and a locking hole (not shown) are provided in a portion of the shape-retaining sheet 38 in the vicinity to the base end in a positional relation to overlap these.

In making the airbag 10, the rear edge 63 of the left outside panel 60 and the rear edge 73 of the right outside edge 70 are sewn to the lateral front edges 88 and 89, respectively, in a state where the base panel 80 is spread flat as shown in Fig. 4. Reference numeral S in Fig. 4 indicates sewing seams.

Further, the reinforcing cloth 91 is disposed on the peripheral edge of the gas introducing port 90 along an inner face (the face that becomes the inside of the airbag 10 when the airbag 10 becomes a finished product) of the bottom face 80B of the base panel 80. Also, the shape-retaining sheet 38 is overlapped with the outer face (the face that becomes the outside of the airbag 10 when the airbag 10 becomes a finished product) of the bottom face 80B such that the gas introducing ports 90 and 38c coincide with each other, the stud bolt insertion holes 92 and 38d coincide with each other, and the pawl locking holes coincide with each other. Then, the peripheral edges of the gas introducing ports 90 and 38c and the reinforcing cloth 91 are sewn together. In addition, the shape-retaining sheet 38, as shown in Fig. 4, takes such a posture that its leading end extends further rearwardly than the rear edge 87 of the base panel 80.

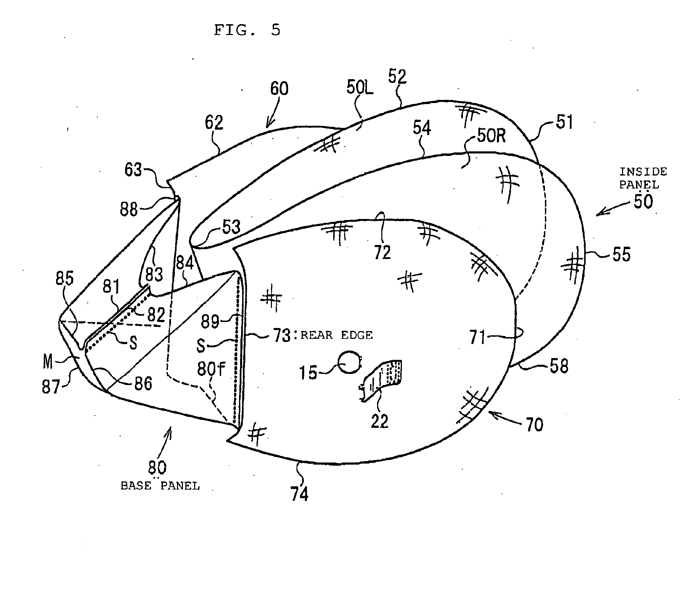

Next, the facing edges 81 and 82 of the flaps 80D and 80E of the base panel 80 are sewn together. This brings the panels 60, 70 and 80 into the state shown in Fig. 5. In Fig. 5, illustration of the shape-retaining sheet 38 is omitted.

Next, as shown in Fig. 5, the left outside panel 60 is caused to face the left side 50L of the inside panel 50, and the leading edges 51 and 61, the upper edges 52 and 62 and the lower edges 56 and 64 are sewn together, respectively. The right outside panel 70 is caused to face the right side 50R of the inside panel 50, and the leading edges 55 and 71, the upper edges 54 and 72 and the lower edges 58 and 74 are sewn together, respectively. Also, the flap front edges 83 and 84 of the base panel 80 are sewn to the upper edge 53 in the vicinity of the folded-back portion of the inside panel 50, and the bottom front edge 80f of the base panel 80 is sewn to the lower edge 57 in the vicinity of the folded-back portion.

In this embodiment, each of the width-regulating tethers 20L and 20R comprises a pair of tether halves 21 and 22. As shown in Fig. 2, the one tether half 21 has one end sewn on the inner face of the inside panel 50. In addition, in this embodiment, the one end of the tether half 21 and one end of the left or right halves of connecting band 18L or 18R are disposed in a positional relation to overlap each other with the inside panel 50 therebetween, and are sewn integrally with the inside panel 50. Therefore, the tether half 21 functions as a reinforcing cloth between the inside panel 50 and the left or right half of connecting band 18L or 18R, and the left or right half of connecting band 18L or 18R functions as a reinforcing cloth between the inside panel 50 and the tether half 21.

The other tether half 22 has one end sewn on the inner face of each of the outside panels 60 and 70. Reference numeral 23 represents reinforcing cloths that are disposed across the outside panels 60 and 70 from the one ends of the tether halves 22 and are sewn together therewith.

Next, the tether half 21 attached to the left side 50L and the other end of the tether half 22 attached to the left outside panel 60 are sewn together, and the tether half 21 attached to the right side 50R and the other end of the tether half 22 attached to the right outside panel 70 are sewn together.

By sewing the other ends of the tether halves 21 and 22 together, the left side 50L and the left outside panel 60 are connected to each other by the tether 20L, and the right side 50R and the right outside panel 70 are connected to each other by the tether 20R, thereby regulating the width of the left airbag section 12 and the right airbag section 14 when they are inflated.

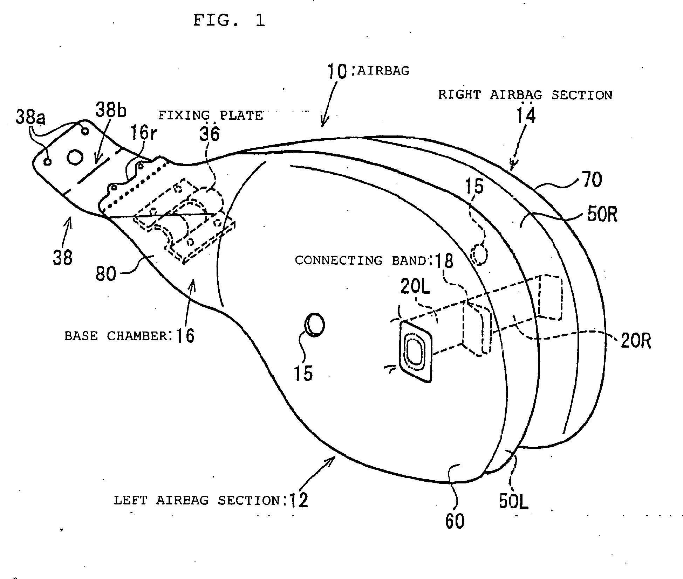

By thus sewing, the airbag 10 (shown in Fig. 1) becomes to be an inside-out state, that is, to expose a sewing thread to the surface of the airbag. As shown in Fig. 5, the flap rear edges 85 and 86 and the rear edge 87 of the base panel 80 are not yet sewn together, but they form an opening M in this state.

Consequently, the airbag is inverted through the opening M. Next, the opening M is sewn and the left and right halves of connecting band 18L and 18R are sewn together, resulting in the airbag 10 in Fig. 1.

In this embodiment, an inflator 34 is disposed within the base chamber 16 through the gas introducing ports 38c and 90 at the bottom of the base chamber 16. In this embodiment, the inflator 34 is rod-shaped, and disposed such that the longitudinal direction is the width direction (the right-and-left direction) of a vehicle. Reference numeral 36 represents a fixing plate as a fixture to fix the bottom face of the base chamber 16 and the inflator 34 to an airbag mounting face of the accommodating case 40 (the bottom face of an accommodating case 40 in this embodiment).

As shown in Fig. 1 and Figs. 16(b), 17(b), 18(b) and 19(b), the fixing plate 36 has C-shaped bands (reference numerals are omitted) fitted on peripheral sides of the inflator 34 at the longitudinal opposite ends, flanges (reference numerals are omitted) that extend along the bottom face of the base chamber 16 (and the airbag mounting face of the case 40) from both ends of the C-shaped bands, and stud bolts 36a protruding downwardly from the flanges, respectively. In addition, each flange is provided with a pawl (reference numeral is omitted) to lock the fixing plate 36 to the bottom face of the base chamber 16.

Prior to folding of the airbag 10 that has been completely sewn, the fixing plate 36 is introduced into the base chamber 16 from the gas introducing ports 38c and 90, and attached to the bottom face of the base chamber 16. At this time, the flanges of the fixing plate overlap peripheral edge of the gas introducing port 90 while the stud bolts 36a are inserted into the insertion holes 92, 38d, respectively, and the pawl of the flanges are hooked to the locking holes, respectively, thereby fixing the fixing plate 36. The stud bolts 36a extend to the outside of the airbag 10 through the insertion holes 92, 38d.

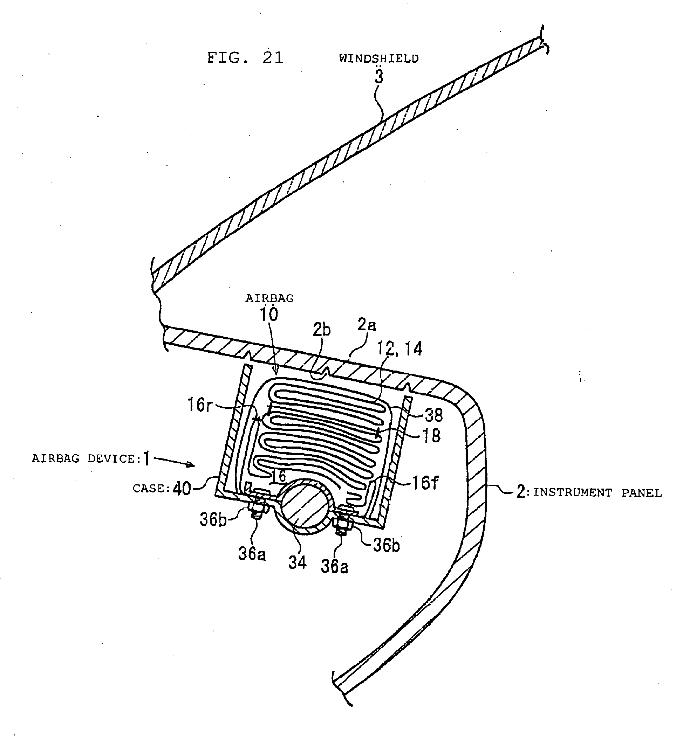

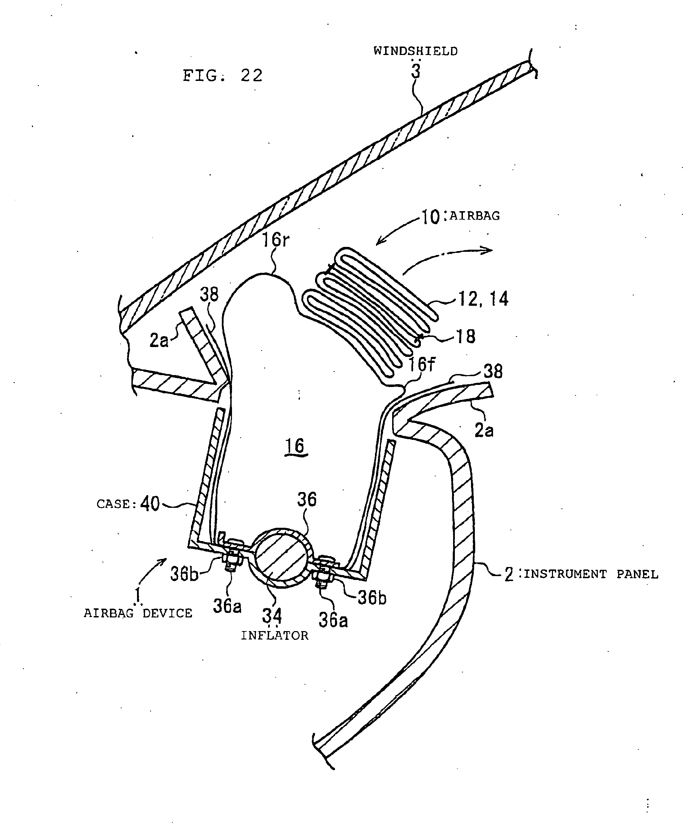

By fastening the fixing plate 36 to the airbag mounting face of the case 40 with the stud bolts 36a, the bottom face of the base chamber 16 and the inflator 34 are fixed to the airbag mounting face. Reference numeral 36b in Figs. 21 and 22 represent nuts fitted around the stud bolts 36a, respectively.

Next, the process of folding the airbag 10 will be described with reference to Figs. 6 to 19.

In folding the airbag 10, first, the left airbag section 12 and the right airbag section 14 are spread flat such that their respective left and right lateral faces (the left side 50L and the left outside panel 60 or the right side 50R and the right outside panel 70) overlap each other. Then, as shown in Figs. 6 to 12, the left airbag section 12 and the right airbag section 14 are respectively folded so as to have a reduced vertical width, resulting in primary folded bodies that are elongated in forward and rearward directions.

In the primary folded bodies, in this embodiment, first as shown in Figs. 6 and 7, a portion of the left airbag section 12 (lower airbag section) that is lower than the connecting band 18 (the connecting band between the left airbag section 12 and the right airbag section 14) is folded back upwardly along a folding line L₁ that connects a lower edge of the connecting band 18 and a lower edge of the fixing plate 36 at the front end, and is overlapped with the left outside panel 60.

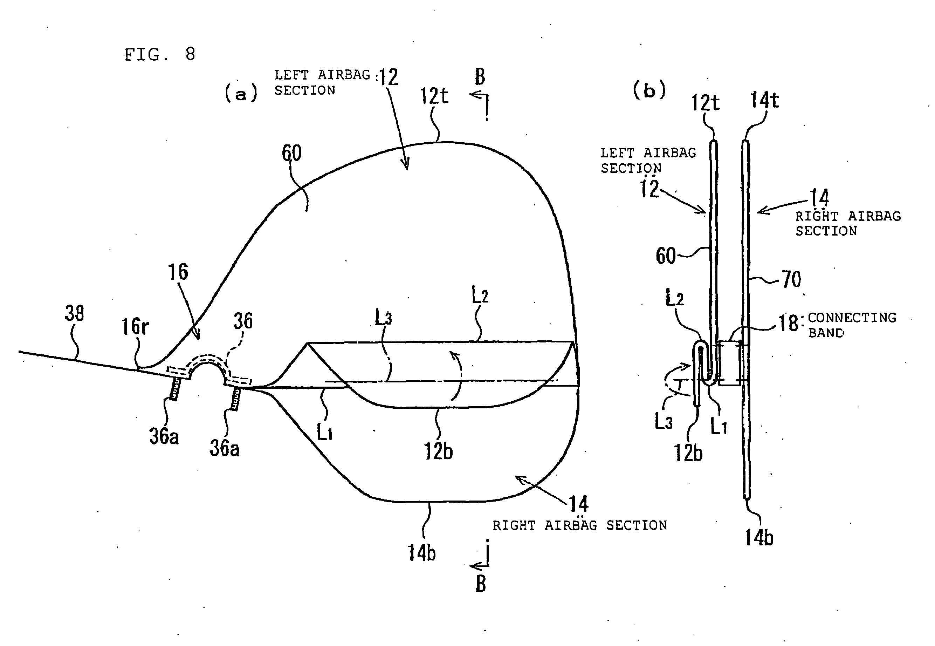

Next, as shown in Figs. 7 and 8, a portion closer to the lower edge 12b than the folding line L₂ is folded back downwardly along a folding line L₂ that extends parallel to the folding line L₁ with a predetermined spacing on the lower edge 12b side (on the upper side) of the folding line L₁ so that the portion is overlapped with the outside (the side opposite to the remaining right airbag section 14). At this time, the position of the folding line L₂ is determined, for example, by placing a ruler or a plate, etc. having a predetermined width along the folding line L₁. Similar to this, the following folding lines L₃ to L₇ are also determined by placing a ruler or a plate, etc. having a predetermined width along a previous folding line.

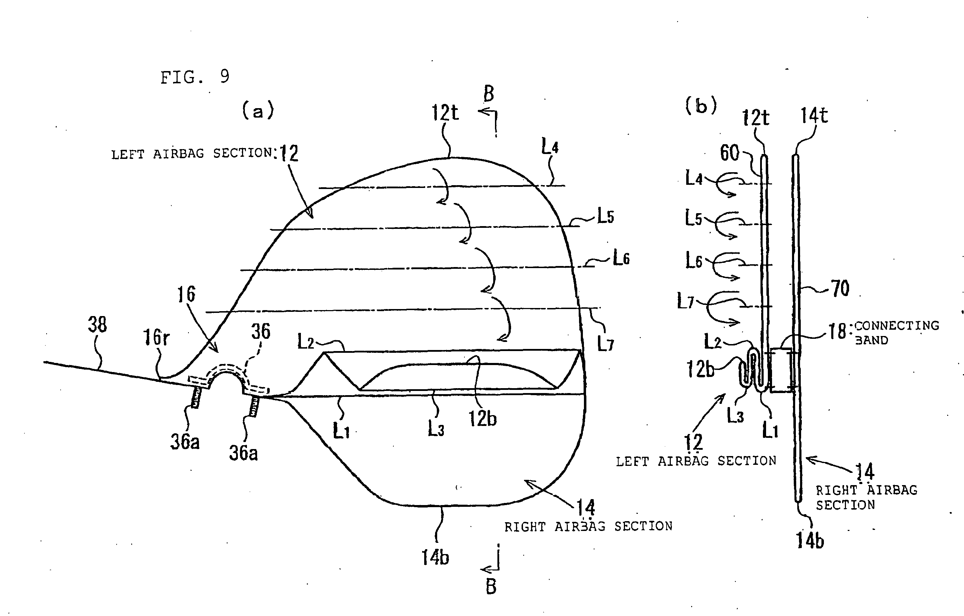

Next, as shown in Figs. 8 and 9, the portion that protrudes downwardly from the folding line L₁ is folded back upwardly after the second folding. At this time, a portion closer to the lower edge 12b than the folding line L₃ is folded back upwardly so as to be overlapped with the outside along a folding line L₃ that extends parallel to the folding line L₂ with a predetermined spacing (in this embodiment, the spacing that is narrower than the spacing between the folding line L₂ and the folding line L₁) on the lower edge 12b side (on the lower side) of the folding line L₂.

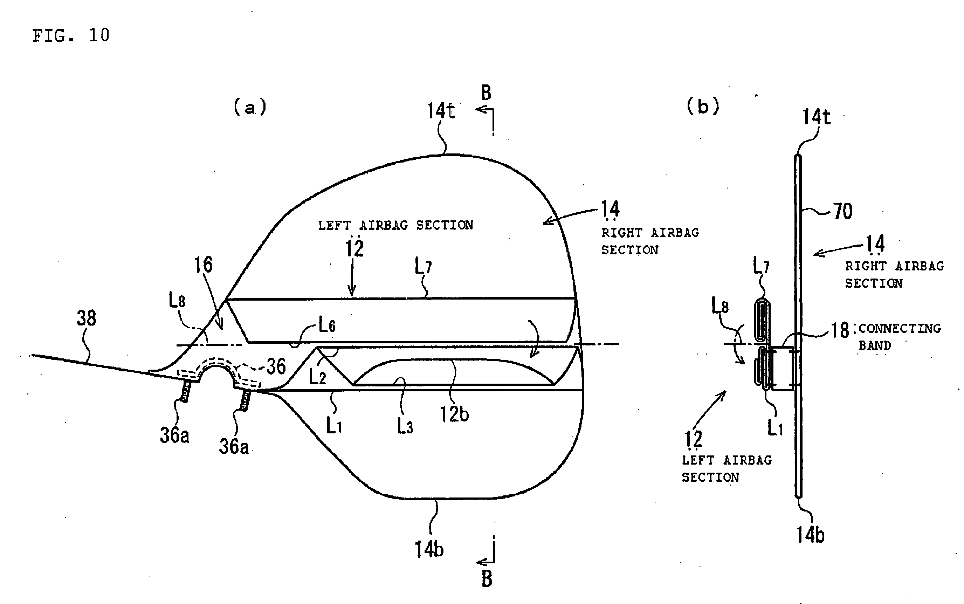

Next, as shown in Figs. 9 to 10, a portion of the left airbag section 12 (an upper airbag section) closer to an upper edge 12t than the connecting band 18 is folded back toward the left outside panel 60 sequentially along folding lines L₄, L₅, ···, (only folding lines up to L₇ are shown in Fig. 9) that extend parallel to the folding line L₁ by a predetermined width downwardly from the upper edge 12t, resulting in an elongated folded roll. In this embodiment, the spacing of the folding lines L₄ to L₇ is set such that, when the upper folded roll reaches a portion near an upper portion of the lower folded body as shown in Fig. 10, its vertical width becomes approximately equal to the vertical width of the lower folded body.

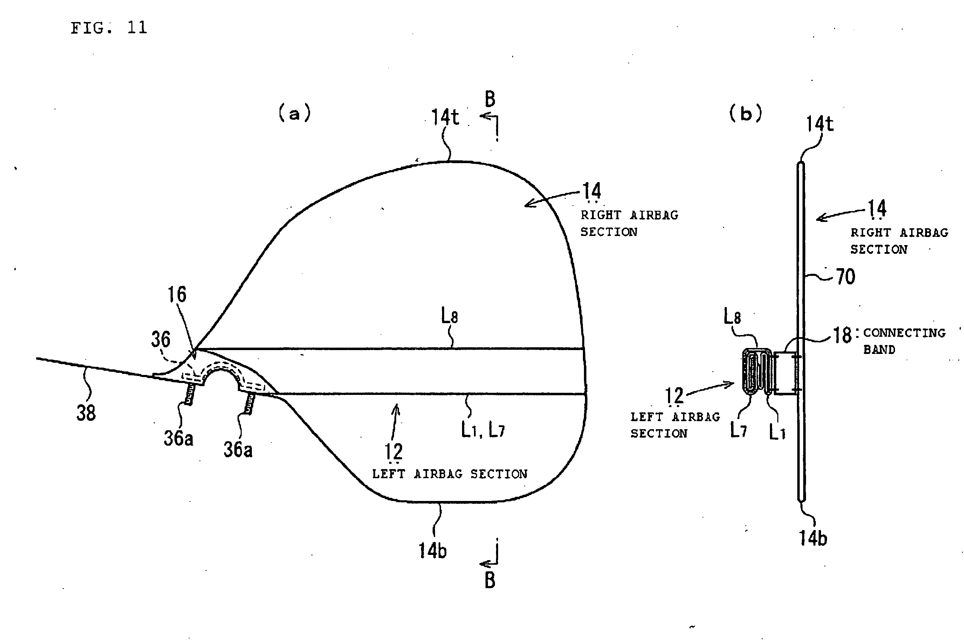

Thereafter, as shown in Figs. 10 and 11, the upper folded roll is folded back downwardly along a line L₈, that is located between the folded roll and the lower folded body and extends parallel to the line L₁, so as to be overlapped with the outside of the lower folded body.

In addition, the roll folding may be performed, for example, by winding the upper airbag section around a predetermined width of a band-like plate from the upper edge 12t. In this case, the upper airbag section may be wound around a band-like plate and roll-folded. The resulting folded roll may be overlapped with the outside of the lower folded body. The band-like plate may be then pulled out of the folded roll. Thus, the folding work of the upper airbag section can be efficiently performed.

The right airbag section 14 is also primarily folded through the process similar to the left airbag section 12. Fig. 11 shows that the primary folding of the left airbag section 12 and the right airbag section 14 has been completed. In addition, in Figs. 6 to 11, reference numerals 14b and 14t represent a lower edge and an upper edge, respectively, of the right airbag section 14.

As such, when the left airbag section 12 and the right airbag section 14 are primarily folded, a first folding is performed along the folding line L₁ which connects the lower edge of the connecting band 18 with the lower edge of the fixing plate 38 at its front end when the left airbag section 12 and the right airbag section 14 are primarily folded, the position of the first fold is determined to be uniform. Also, the folding of the primary folding after the first folding can be performed parallel to the first folding line L₁ on the basis of the first folding line.

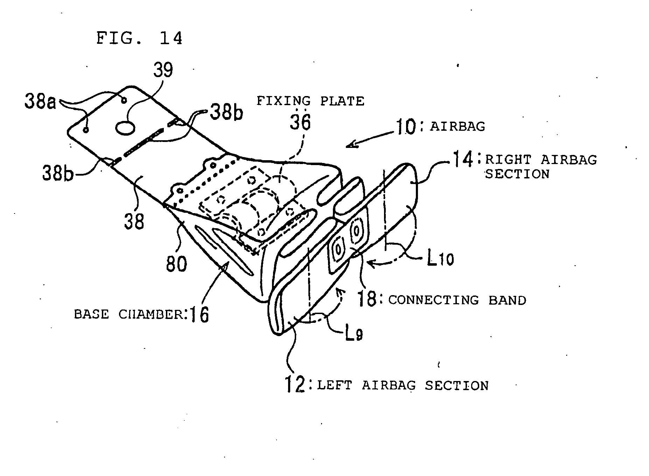

Next, as shown in Figs. 13 and 14, in the primary folded bodies of the left airbag section 12 and the right airbag section 14 that are long in forward and rearward directions, portions closer to the leading ends of the primary folded bodies than the connecting band 18 are separated from each other to the right and left in the shape of open legs, and portions closer to rear ends of the primary folded bodies than the connecting band 18 are folded in a accordion fashion (in a zigzag fashion) so as to have a reduced longitudinal width. Next, as shown in Figs. 14 and 15, the portions of the airbag sections 12 and 14 closer to the leading ends than the connecting band 18 are folded back to the front of the connecting band 18 along the vertical folding lines L₉ and L₁₀, respectively, that are located in the middle of the portions closer to the leading ends. As a result, a secondary folded body shown in Fig. 14 is formed.

The primary folding method and the secondary folding method of the left airbag section 12 and the right airbag section 14 are not limited to the above description.

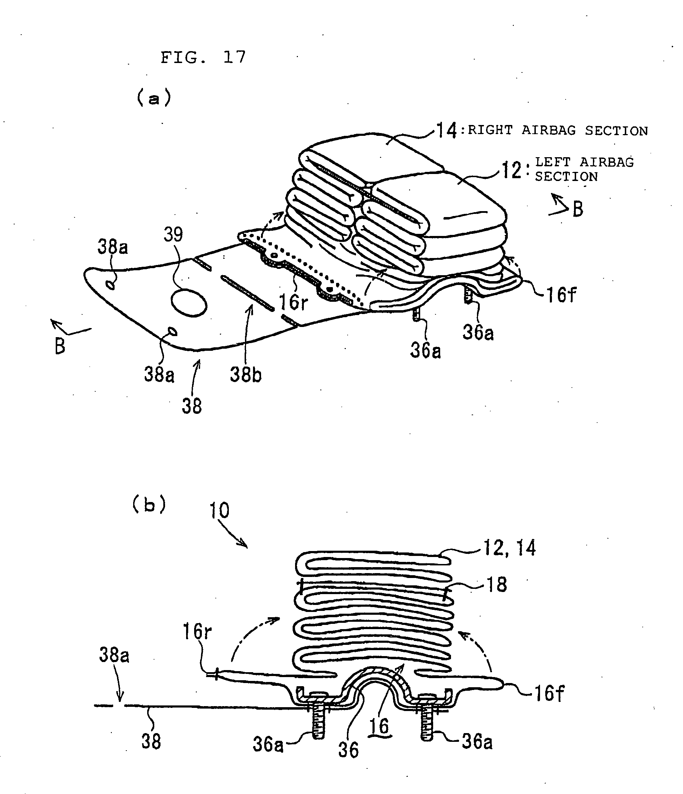

Next, as shown in Figs. 15 to 17, the base panel 80 is flattened so that the base chamber 16 becomes a so-called "beaten state," and the secondary folded body of the left airbag section 12 and the right airbag section 14 is placed on the flattened base panel. As a result, as shown in Fig. 17(b), the base chamber 16 and the secondary folded body overlap the fixing plate 36. Fig. 15 shows a state of the base panel 80 before being flattened, Fig. 16 shows a state of the base panel 80 while being flattened, and Fig. 17 shows a state of the base panel after being flattened.

When the base panel 80 is flattened, as shown in Fig. 16(b), the portion between the front edges 83 and 84 of the flaps 80D and 80E and a rear edge of the gas introducing port 90 of the base panel 80 are loosened. As indicated by the arrow R in Fig. 16(b), a rear end 16r of the base chamber 16 is pulled rearwardly, and the base chamber 16 is pulled out rearwardly by the loosened distance.

When the rear end 16r is pulled rearwardly, the base panel 80 remains loosened between the rear end 16r and the flap front edges 83 and 84 (flaps 80D and 80E) even if a portion between the rear end 16r and the rear edge of the gas introducing port 90 is stretched without looseness. Consequently, in this embodiment, as shown in Fig. 17(b), the middle portions of the flaps 80D and 80E are introduced into the space below the secondary folded body by the loosened distance so that the portion pulled out rearwardly of the secondary folded body extends flatly. Except for this operation, the flaps 80D and 80E may be folded in a zigzag pattern and overlapped with the rear end 16r, for example, by chucking out the middle portions of the straps 80D and 80E rearwardly by the loosened distance.

In addition, since looseness is also caused in the portion between the bottom front edge 80f and the front edge of the gas introducing port 90 of the base chamber 16, the base chamber 16 is also pulled out forwardly by pulling a front end 16f of the base chamber 16 forward as indicated by the arrow F. In this case, since the length of the base panel 80 from the rear edge of the gas introducing port 90 to the flap front edges 83 and 84 is larger than the length of the base panel 80 from the front edge of the gas introducing port 90 to the bottom front edge 80f, the length of the base chamber 16 that is pulled out forward (in the F-direction) becomes larger than the length of the base chamber 16 that is pulled out rearwardly (in the R-direction). It should be noted herein that pull-out of the front end 16f toward a passenger may be omitted.

When the base panel 80 is flattened, looseness is also caused in the left lateral face 80A and the right lateral face 80C of the panel 80. In this embodiment, the left lateral face 80A and the right lateral face 80C are respectively folded into the space below the secondary folded body.

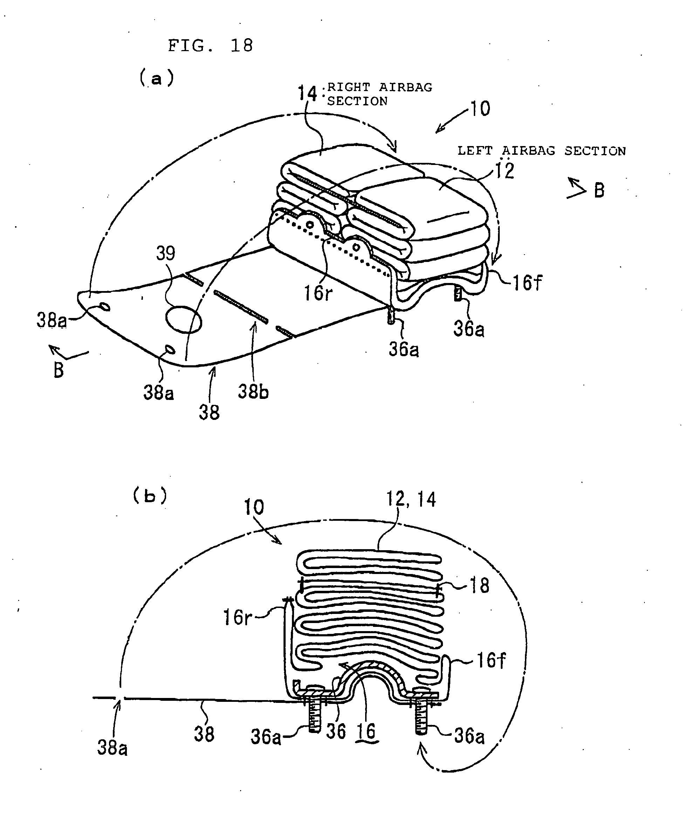

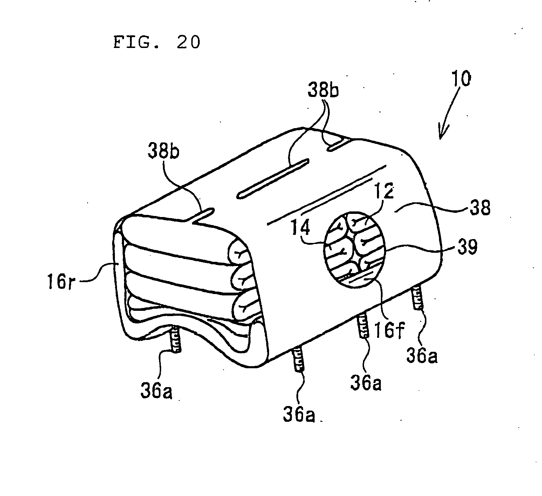

Thereafter, the pulled-out portions of the base chamber 16 closer to the rear end 16r and the front end 16f are respectively folded back upwardly and overlapped with the rear side (the side opposite to a passenger) and the front side (the passenger side) of the secondary folded body. In addition, as shown in Figs. 18 to 20, the pulled-out portion of the base chamber closer to the rear end 16r cover the rear lateral face of the secondary folded body from its lower end to a portion in the vicinity of its upper end, and the pulled-out portion of the base chamber closer to the front end 16f cover only the portions in the vicinity of the lower ends of the front lateral face of the secondary folded body.

Thereafter, as shown in Figs. 18 and 19, the shape-retaining sheet 38 is pulled forwardly around the folded body of the airbag 10 so as to cover the folded body from its rear side to the upper side. Then, the stud bolts 36a extending from the bottom of the base chamber 16 are inserted through the insertion holes 38a, respectively, of the shape-retaining sheet 38 at its leading end, and thereby the shape-retaining sheet 38 is caught by the stud bolts 36a. As a result, the folded body of the airbag 10 is wrapped (retained in shape) by the shape-retaining sheet 38, completing the folding of the airbag 10.

When the folded body of the airbag 10 is wrapped by the shape-retaining sheet 38 as such, the opening 39 provided in the shape-retaining sheet 38 is disposed so as to face the lateral face of the folded body on the passenger side. As a result, the folded state of the airbag 10 formed on the lateral face of the folded body on the passenger side can be observed with eyes or fingers through the opening 39. In addition, in this embodiment, the opening 39 is sized such both the lateral face of the secondary folded body of the left airbag section 12 and the right airbag section 14 on the passenger side, and the leading end 16f of the base chamber 16 that is pulled out toward the passenger and overlapped below the lateral face of the secondary folded body on the passenger side can be observed.

As a result of observing the folded state of the airbag 10 through the opening 39, if it is proved that the airbag 10 is folded by an abnormal folding method or the folding is not maintained, the airbag 10 is refolded after the shape-retaining sheet 38 is removed, or measures such as rearranging the fold are taken. Thereafter, the folded body of the airbag 10 is rewrapped by the shape-retaining sheet 38. Alternatively, the folding of the folded body may be arranged by inserting an operator's finger into the opening 39.

The folded body of the airbag 10 along with the inflator 34 is accommodated within the case 40 and the accommodated airbag 10 is fixed to the airbag mounting face by nuts 36b and bolts 36a of the fixing plate 36, thereby forming an airbag device 1.

In the airbag device 1, since the folded body of the folded airbag 10 is wrapped by the shape-retaining sheet 38, the folded shape of the folded body is maintained. Therefore, when the folded body of the airbag 10 is accommodated within the case 40, the work can be efficiently performed.

Also, any slip between the folded body of the airbag 10 accommodated within the case 40 and the inner face of the case 40, the instrument panel 2 or a lid is eliminated or suppressed.

In this embodiment, the airbag device 1 is installed on the back of an instrument panel 2 in front of a front passenger seat. A portion of the instrument panel 2 that covers the case 40 serves as a door 2a that is pushed and torn open toward the interior of the vehicle by the airbag 10 when the airbag 10 is inflated. Reference numeral 2b in Fig. 21 represents a tear line that induces the tearing of the door 2a.

It should be noted herein that a lid (lid member) adapted to be pushed and torn open when the airbag 10 is inflated may be mounted on the case 40 and the instrument panel 2 may be provided with an opening for installation of the airbag device 1 so that, when the airbag device 1 is installed within the opening, the opening is covered with the lid.

As shown in Fig. 21, a windshield 3 exists above the instrument panel 2. The windshield rises upwardly while it is inclined rearwardly of the vehicle from an end of the instrument panel 2 on the front side of the vehicle.

If a vehicle equipped with the airbag device 1 encounters an emergency situation, the inflator 34 operates to discharge gas. As a result, gas is discharged into the base chamber 16 from the inflator 34. The gas from the inflator 34 flows into the left airbag section 12 and the right airbag section 14 from the base chamber 16. Then, this gas causes the left airbag section 12 and the right airbag section 14 to inflate on the left and right sides, respectively, in front of a passenger.

When the airbag 10 begins to be inflated, the shape-retaining sheet 38 is ruptured along the slits 38b due to the inflation pressure of the airbag 10, thereby releasing the folds of the airbag 10. Next, the base chamber 16 is inflated, which in turn pushes the secondary folded body of the left airbag section 12 and the right airbag section 14 out of the case 40 while pushing the door 2a of the inflator open.

In this embodiment, when the base chamber 16 is folded, the portion of the base chamber 16 closer to its rear end 16r is pulled out rearwardly and overlapped with the rear lateral face of the secondary folded body. Thus, when the base chamber 16 is inflated, as shown in Fig. 22, the rear end 16r swells greatly on the rear side (vehicle front side) of the secondary folded body. Thereby, the secondary folded body is pushed out by the inflated rear end 16r so that the left airbag section 12 and the right airbag section 14 are smoothly deployed toward the passenger.

In this embodiment, since the portion of the base chamber 16 closer to its front end 16f is also pulled out a bit forwardly, as shown in the drawing, the portion of the base member closer to the front end 16f is inflated so as to support the secondary folded body on the front bottom of the secondary folded body.

Thereafter, the left airbag section 12 and the right airbag section 14 are inflated to the left and right, respectively, in front of a passenger, whereby the left airbag section 12 receives the left chest of a passenger and the right airbag section 14 receives the right chest of the passenger. Hard and strong ribs exist in the left and right chests. The left airbag section 12 and the right airbag section 14 receive and absorb an impact on the passenger through the ribs. Also, the space 13 exists between the leading ends of the inflated left and right airbag sections 12 and 14 so that the breastbones in the center of the passenger's chest faces the space 13. Thus, if the passenger's body rushes into the airbag 10, the breastbone region of the chest does not receive reaction force too much from the airbag 10. As a result, a burden on the breastbones becomes small.

In this embodiment, in a state in which the airbag 10 is inflated, the spacing between the front most ends of the left airbag section 12 and the right airbag section 14 is set to 150 to 450 mm. Thus, the inflated left airbag section 12 directly faces a central region of the left chest, and the inflated left airbag section 14 directly faces a central region of the right chest. As a result, the region of the ribs of the upper half of the passenger's body is reliably and securely received by the airbag 10.

The above embodiment is just an example, and the invention is not limited to the above embodiment.

For example, the opening of the shape-retaining sheet may have other shapes than those illustrated. In the above embodiment, the opening is provided so as to face the lateral face of the folded body of the airbag on the passenger side. However, an opening may be provided so as to face the lateral face of the folded body opposite to a passenger or the top face thereof. The shape-retaining sheet may be adapted to cover, including the above lateral faces, right and left lateral faces of the folded body. In this case, openings may be provided so as to face the right and left lateral faces of the folded body. A plurality of openings may be provided, or one opening may be provided so as to exist over a plurality of the lateral faces of the folded body.

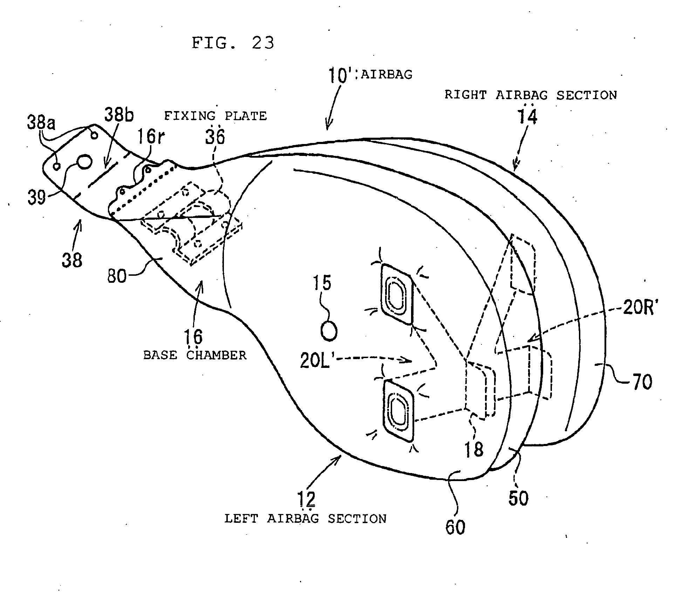

The structure of the width-regulating tethers provided within the right and left airbag sections, respectively, is not limited to the above embodiment. For example, tethers such as width-regulating tethers 20L' and 20R' of an airbag 10' may be provided which extend in an oblique direction as shown in Fig. 23. It is natural that a plurality of width-regulating tethers may be provided, with their arrangement positions and extension directions being made different from each other.

The above embodiments illustrate applications of the invention for a front passenger airbag device of automobiles. However, the invention is naturally applicable not only to airbag devices for passengers other than the front passenger but also to airbag devices for receiving passengers of highspeed mobile objects other than the automobile.

## Claims

1. An airbag device comprising a folded airbag (10), a case (40) accommodating the airbag (10), and an inflator (34) for inflating the airbag (10), the airbag (10) on a leading-end side being inflated in a direction away from a base-end side of the airbag (10) by gas discharged from the inflator (34) disposed on the base-end side,
the airbag (10) including a base end part (16) having a gas introducing port (38c, 90) that receives.gas from the inflator (34), a left airbag section (12) that is connected to the base end part (16) and inflated on the left in front of a passenger, and a right airbag section (14) that is connected to the base end part (16) and inflated on the right in front of the passenger,
wherein the folded airbag (10) is wrapped by a shape-retaining sheet (38), and
wherein the shape-retaining sheet (38) is provided with an opening (39) for allowing the folded airbag (10) to be observed.

2. The airbag device according to Claim 1,
wherein the airbag (10) is made by primarily folding the left airbag section (12) and the right airbag section (14) to form primary folded bodies that are elongated in forward and rearward directions, then a secondarily folding the primary folded bodies so as to have a reduced longitudinal width to form secondary folded body, and thereafter folding the base end part (16), and
the opening (39) is provided in a position where it overlaps at least one of the lateral face of the secondary folded body on the passenger side and the lateral face of the secondary folded body on the opposite side to the passenger.

3. The airbag device according to Claim 2,
wherein a portion of the base end part (16) closer to the passenger is pulled out farther than the secondary folded body and folded,
a portion of the lateral face of the secondary folded body in the lateral face of the folded airbag is covered by the pulled-out portion (16f) of the base end part (16), and
the opening (39) is provided in a position where it faces both the pulled-out portion (16f) of the base end part (16) and the lateral face of the secondary folded body that are not covered by the base end part.

## Patentansprüche

1. Airbaganordnung mit gefaltetem Airbag (10), einem den Airbag (10) aufnehmenden Gehäuse (40) und einer Aufblasvorrichtung (34) zum Aufblasen des Airbags (10), wobei der Airbag (10) am Vorderende in eine Richtung weg vom Basisende des Airbags (10) durch Gas aufgeblasen wird, das von der am Basisende angeordneten Aufblasvorrichtung (34) geliefert wird,
wobei der Airbag (10) ein Basisendteil (16) mit einer Gaseinlassöffnung (38c, 90) zur Aufnahme von Gas von der Aufblasvorrichtung (34), einen linken Airbagabschnitt (12), der mit dem Basisendteil (16) verbunden ist und auf der linken Seite vor einem Insassen aufgeblasen wird, sowie einen rechten Airbagabschnitt (14), der mit dem Basisendteil (16) verbunden ist und auf der rechten Seite vor dem Insassen aufgeblasen wird, aufweist,
wobei der gefaltete Airbag (10) von einer formstabilen Hülle (38) umgeben ist und
wobei die formstabile Hülle (38) mit einer Öffnung (39) versehen ist, um den gefalteten Airbag (10) betrachten zu können.

2. Airbaganordnung nach Anspruch 1,
wobei der Airbag (10) durch primäres Falten des linken Airbagabschnitts (12) und des rechten Airbagabschnitts (14) in primär gefaltete, in Vorwärts- und Rückwärtsrichtung gestreckte Körper, durch anschließendes sekundäres Falten der primär gefalteten Körper in sekundär gefaltete Körper mit reduzierter Breitenabmessung und schließlich durch Falten des Basisendteils (16) entsteht, und
die Öffnung (39) an einer Stelle vorgesehen ist, wo sie die laterale Fläche des sekundär gefalteten Körpers auf der Insassenseite und/oder die laterale Fläche des sekundär gefalteten Körpers auf der dem Insassen gegenüberliegenden Seite überlappt.

3. Airbaganordnung nach Anspruch 2,
wobei ein Teil des Basisendteils (16), der näher beim Insassen liegt, weiter als der sekundär gefaltete Körper herausgezogen und gefaltet wird,
ein Teil der lateralen Fläche des sekundär gefalteten Körpers auf der lateralen Fläche des gefalteten Airbags von dem herausgezogenen Teil (16f) des Basisendteils (16) bedeckt wird, und
die Öffnung (39) an einer Stelle vorgesehen ist, wo sie sowohl dem herausgezogenen Teil (16f) des Basisendteils (16) als auch der lateralen Fläche des sekundär gefalteten Körpers, die nicht vom Basisendteil bedeckt sind, zugewandt ist.

## Revendications

1. Dispositif d'airbag comprenant un airbag plié (10), un compartiment (40) recevant l'airbag (10) et un gonfleur (34) pour gonfler l'airbag (10), l'airbag (10) étant gonflé sur un côté d'extrémité avant dans une direction opposée à un côté d'extrémité de base de l'airbag (10) par du gaz délivré par le gonfleur (34) placé sur le côté d'extrémité de base,
l'airbag (10) comprenant une partie d'extrémité de base (16) ayant un orifice d'introduction de gaz (38c, 90) qui reçoit du gaz du gonfleur (34), une section d'airbag gauche (12) qui est raccordée à la partie d'extrémité de base (16) et gonflée sur la gauche devant un passager, et une section d'airbag droite (14) qui est raccordée à la partie d'extrémité de base (16) et gonflée sur la droite devant le passager,
dans lequel l'airbag plié (10) est enveloppé par une feuille de maintien de forme (38), et
dans lequel la feuille de maintien de forme (38) est pourvue d'une ouverture (39) pour pouvoir observer l'airbag plié (10).

2. Dispositif d'airbag selon la revendication 1, dans lequel l'airbag (10) est formé en pliant tout d'abord la section d'airbag gauche (12) et la section d'airbag droite (14) pour former des corps pliés primaires qui sont allongés vers l'avant et vers l'arrière, puis en pliant en second lieu les corps pliés primaires de manière à avoir une épaisseur longitudinale réduite pour former un corps plié secondaire et, enfin, en pliant la partie d'extrémité de base (16), et
l'ouverture (39) est ménagée dans une position où elle chevauche au moins une face parmi la face latérale du corps plié secondaire du côté passager et la face latérale du corps plié secondaire du côté opposé au passager.

3. Dispositif d'airbag selon la revendication 2, dans lequel une portion de la partie d'extrémité de base (16) plus proche du passager est déployée plus loin que le corps plié secondaire et repliée,
une portion de la face latérale du corps plié secondaire dans la face latérale de l'airbag plié est couverte par la portion déployée (16f) de la partie d'extrémité de base (16), et
l'ouverture (39) est ménagée dans une position où elle se trouve en regard à la fois de la portion déployée (16f) de la partie d'extrémité de base (16) et de la face latérale du corps plié secondaire qui ne sont pas couvertes par la partie d'extrémité de base.
